Europäisches Patentamt

European Patent Office

Office européen des brevets

(19)

(11) **EP 0 889 309 A1**

(12) # DEMANDE DE BREVET EUROPEEN

(43) Date de publication:
**07.01.1999 Bulletin 1999/01**

(51) Int Cl.⁶: **G01L 23/22**

(21) Numéro de dépôt: **98401590.9**

(22) Date de dépôt: **26.06.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **03.07.1997 FR 9708445**

(71) Demandeur: **RENAULT
92109 Boulogne-Billancourt (FR)**

(72) Inventeur: **Boubal, Olivier
78260 Achères (FR)**

(74) Mandataire: **Fernandez, Francis Lionel et al
RENAULT,
860, Quai de Stalingrad,
S. 0267-TPZ-OJ2-1.10
92109 Boulogne-Billancourt (FR)**

(54) **Dispositif de détection et de mesure de cliquetis et système anti-cliquetis comprenant un tel dispositif**

(57) L'invention concerne les moteurs à explosion à allumage commandé et, plus particulièrement, dans de tels moteurs, un dispositif pour détecter et mesurer la valeur du cliquetis.

L'invention réside dans le fait que le dispositif de détection et de mesure comprend un capteur d'émission acoustique (24) fixé sur la culasse du moteur et un circuit électronique de traitement (26, 54) du signal fourni par le capteur (24). Le signal obtenu après traitement est par exemple appliqué à un système anti-cliquetis (34) qui fait partie du calculateur d'injection du moteur.

L'invention est applicable aux moteurs à explosion à allumage commandé.

FIG.1

EP 0 889 309 A1

## Description

L'invention concerne les moteurs à combustion interne du type à explosion à allumage commandé et, plus particulièrement dans de tels moteurs, un dispositif pour détecter et mesurer le cliquetis du moteur ainsi qu'un système pour éviter le cliquetis en mettant en oeuvre le dispositif de détection et de mesure.

Dans un moteur à explosion à essence à allumage commandé, le mélange air-carburant s'enflamme sous l'effet de l'étincelle électrique d'une bougie d'allumage. Cette étincelle apparaît à une position déterminée du piston dans le cylindre avant le Point Mort Haut appelé P.M.H. Il peut se produire que dans certaines conditions, le mélange air-carburant non brûlé s'enflamme spontanément en fin de combustion de sorte qu'il en résulte un mauvais fonctionnement du moteur appelé cliquetis qui se manifeste sous la forme de chocs ou vibrations de la chambre de combustion.

Divers dispositifs ont été proposés pour détecter le cliquetis et l'un des dispositifs proposés consiste à détecter l'apparition du cliquetis par un capteur du type à accéléromètre.

Un capteur accélérométrique présente l'inconvénient que le signal de cliquetis qui est détecté par l'accéléromètre correspond aux effets sur la culasse du moteur du phénomène de cliquetis à l'intérieur de la chambre de combustion et mesure donc les effets indirects.

Un but de la présente invention est donc de réaliser un dispositif de détection/mesure de cliquetis qui met en oeuvre un capteur mesurant les effets acoustiques du cliquetis.

A cet effet, le dispositif de détection/mesure du cliquetis d'un moteur à explosion selon l'invention comprend :

- un capteur d'émission acoustique qui est fixé sur la culasse du moteur à explosion, et qui fournit un signal électrique,
- un circuit de préamplification et de filtrage du signal électrique fourni par le capteur d'émission acoustique, et
- un circuit électronique de traitement du signal amplifié et filtré qui fournit une valeur représentative du cliquetis.

Dans un premier exemple de réalisation, le circuit électronique de traitement comprend :

- un circuit électronique réalisant une fenêtre temporelle de mesure du signal amplifié de manière à ne prendre en compte que le signal suivant le Point Mort Haut du piston du moteur,
- un circuit de redressement du signal électrique apparaissant dans la fenêtre temporelle, et
- un circuit d'intégration du signal redressé qui fournit un signal de cliquetis dont l'amplitude est représentative de la valeur du cliquetis.

Le signal électrique fourni par le capteur d'émission acoustique comporte des éléments appartenant au transfert de l'onde de choc de cliquetis à travers la culasse, ce qui détériore la qualité de la mesure des effets acoustiques directs du phénomène de cliquetis.

Un autre but de la présente invention est donc de réaliser un dispositif de détection/mesure de cliquetis dans lequel les éléments du signal électrique correspondant aux effets de l'onde de choc sur la culasse sont éliminés.

Pour éliminer, dans le signal électrique fourni par le capteur d'émission acoustique, les effets de l'onde de choc sur la culasse, l'invention propose un traitement numérique du signal électrique fourni par le capteur d'émission acoustique comprenant les étapes consistant à :

- échantillonner le signal électrique fourni par le capteur d'émission acoustique,
- coder l'amplitude des échantillons pour obtenir des valeurs numériques de mesure,
- calculer une estimation desdites valeurs numériques à l'aide d'un modèle mathématique incluant un modèle de cliquetis et un modèle du système,
- soustraire les valeurs numériques résultant de la mesure de celles estimées par le modèle mathématique de manière à obtenir des valeurs d'écart,
- estimer les paramètres du modèle de cliquetis à partir des valeurs d'écart et du modèle du système,
- remplacer les paramètres du modèle du cliquetis par les nouveaux paramètres estimés, et
- calculer la nouvelle valeur du cliquetis.

Pour mettre en oeuvre ce traitement numérique, le dispositif comprend, outre le capteur d'émission acoustique et le circuit de préamplification et de filtrage,

- un circuit d'échantillonnage du signal électrique amplifié qui est fourni par le capteur d'émission acoustique,
- un circuit de codage de l'amplitude des échantillons qui fournit des valeurs numériques, et
- un calculateur numérique ou microprocesseur convenablement programmé pour calculer d'une part, à l'aide d'un modèle mathématique incluant un modèle de cliquetis et un modèle du système des valeurs numériques estimées du signal du capteur et, d'autre part, les nouveaux paramètres du cliquetis telles que son amplitude, à partir de l'écart entre les valeurs numériques estimées et les valeurs numériques du signal mesuré.

L'invention sera mieux comprise à l'aide de la description suivante d'exemples particuliers de réalisation, ladite description étant faite avec les dessins joints dans lesquels :

- la figure 1 est un schéma d'un premier dispositif de détection et de mesure de cliquetis selon l'invention,
- la figure 2 est un schéma d'un deuxième dispositif de détection et de mesure de cliquetis selon l'invention qui tient compte des effets de l'onde de choc sur la culasse, et
- la figure 3 est un diagramme montrant ce qu'apporte l'invention pour l'avance à allumage.

Sur les figures, les éléments identiques sont désignés par les mêmes références. Ainsi, la référence 10 désigne un cylindre d'un moteur à explosion à essence dans lequel se déplace un piston 12 relié par une bielle 8 à un vilebrequin 14 qui tourne dans le sens indiqué par la flèche 16. L'essence et l'air sont admis dans le haut du cylindre par une soupape 18 qui est montrée en position ouverte. Les gaz de combustion sont évacués par l'intermédiaire d'une soupape 20 montrée en position fermée. Une bougie 22 fournit l'étincelle électrique d'allumage du mélange air-essence.

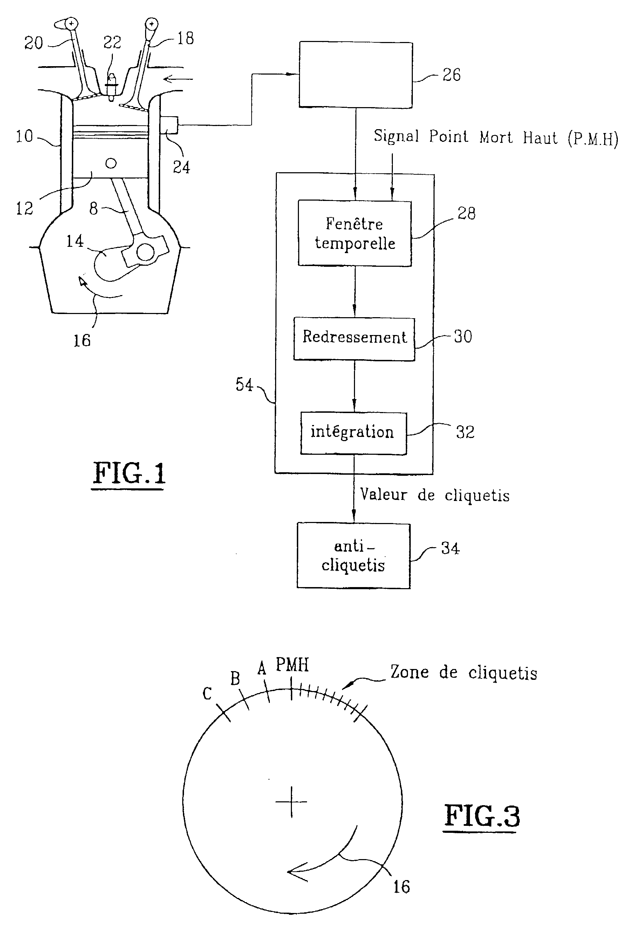

Un premier dispositif de détection et de mesure de cliquetis selon l'invention comprend (figure 1) un capteur du type à émission acoustique 24 incorporant un préamplificateur et un filtre passe-haut référencés 26. La fréquence de coupure du filtre passe-haut correspond à la limite inférieure de la bande fréquentielle du capteur. On peut utiliser par exemple un capteur d'émission acoustique dont la bande fréquentielle couvre une plage de fréquences située au-delà de 100 KHz associée à un filtre passe-haut de fréquence de coupure fixée à 100 KHz. Le capteur 24 est collé sur la paroi extérieure de la culasse du moteur dans la partie haute du cylindre constituant la chambre de combustion et de préférence du côté de la soupape d'admission 18.

Le signal électrique, fourni par le capteur 24, puis amplifié et filtré dans le circuit 26, est appliqué à un circuit électronique de traitement 54 qui comprend une porte électronique 28 ne laissant passer que le signal apparaissant un certain temps après le Point Mort Haut (P.M.H.) du piston, ce qui correspond à environ 40° de rotation du vilebrequin 14 après ce P.M.H. Cette porte électronique réalise une fenêtre temporelle.

Le signal de sortie de la porte électronique 28 est redressé dans un circuit de redressement 30 puis intégré dans un circuit d'intégration 32. Le signal fourni par le circuit d'intégration 32 donne la valeur du cliquetis qui est utilisée par exemple dans un système anti-cliquetis 34.

Le système anti-cliquetis fait, par exemple, partie du calculateur d'injection, qui prend en compte la valeur du cliquetis pour corriger l'avance à l'allumage en fonction du dépassement d'un seuil par cette valeur.

Cette valeur du cliquetis peut aussi être utilisée lors de la mise au point du moteur ou du diagnostic embarqué ou non en aidant à la recherche de l'avance à l'allumage correspondant au cliquetis naissant.

La valeur de cliquetis qui est fournie par le circuit d'intégration 32 correspond au signal détecté par le capteur d'émission acoustique et comporte non seulement des éléments provenant de l'onde de choc de cliquetis mais aussi des éléments qui résultent du transfert de l'onde de choc de cliquetis à travers la culasse.

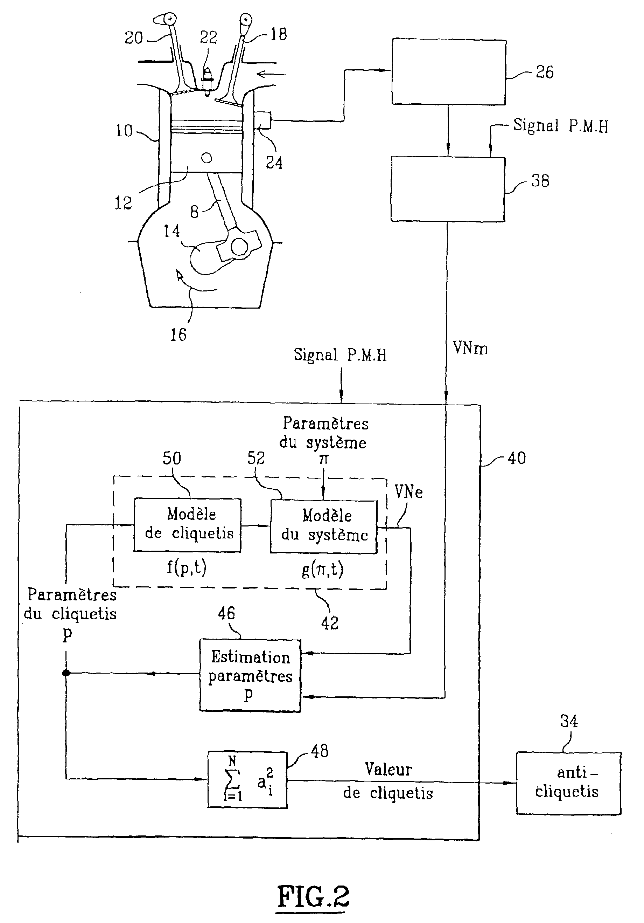

Dans le deuxième exemple de réalisation selon la figure 2, le signal détecté par le capteur d'émission acoustique 24 est, après amplification et filtrage passe-haut dans un circuit 26, appliqué à un circuit d'échantillonnage et de codage 38 qui fournit sur sa sortie des valeurs numériques VNm des amplitudes des échantillons.

Ces valeurs numériques sont appliquées à un calculateur numérique 40 qui est convenablement programmé pour réaliser un certain nombre d'opérations qui seront décrites ci-après.

Ces opérations consistent à :

- estimer (42) une valeur numérique VNe du cliquetis selon un modèle mathématique en prenant en compte les paramètres "p" du cliquetis ainsi que les paramètres "$\pi$" du système chambre de combustion/culasse vis-à-vis du cliquetis,
- estimer (46) les paramètres p du cliquetis en fonction des valeurs VNm et VNe, par exemple en fonction de l'écart $\varepsilon$ entre ces deux valeurs,
- remplacer les anciens paramètres du cliquetis par les nouveaux dans le modèle mathématique (46), et
- calculer la valeur de l'énergie du cliquetis à partir des nouveaux paramètres.

Le modèle mathématique du cliquetis seul (50) est défini par la fonction :

$$k(t) : f(p, t) = \sum_{i=1}^{N} a_i . \delta(t - \tau_i)$$

dans laquelle δ(t) est la fonction impulsion de Dirac, $a_i$ est l'amplitude de l'impulsion, $\tau_i$ est l'instant d'apparition de l'impulsion de rang i et N le nombre d'impulsions qui est retenu.

Le modèle mathématique du système (52) est défini par la fonction :

$$T(t) = g(\pi, t) = \sum_{j=1}^{M} \delta(t-\tau_j)$$

dans laquelle δ(t) est la fonction impulsion de Dirac, $\tau_j$ le retard introduit par le système pour l'impulsion de rang j et M le nombre d'impulsions qui est retenu. L'estimation de la valeur numérique VNe est définie par le produit de convolution suivant :

$$VNe(t) = k(t)*T(t)*c(t)$$

dans lequel c(t) représente la réponse impulsionnelle du capteur et * représente le produit de convolution.

Comme les paramètres du système sont définis une fois pour toute et sont immuables, l'écart ε entre les valeurs numériques estimées VNe et mesurées VNm ne peut être dû qu'aux modifications des paramètres du cliquetis et cet écart ε permet par exemple d'estimer les nouvelles valeurs des paramètres du cliquetis de manière à minimiser l'écart ε. Le procédé d'estimation des paramètres p est, par exemple, du type des moindre carrés récursifs.

La valeur du cliquetis, c'est-à-dire son énergie, est calculée à partir de l'amplitude $a_i$ des impulsions par la formule :

$$\sum_{i=1}^{N} a_i^2$$

C'est cette valeur qui est appliquée au système anti-cliquetis 34 ou à un système de mise au point moteur ou de diagnostic.

Le dispositif qui vient d'être décrit en relation avec la figure 2 permet de détecter très tôt l'apparition du cliquetis car le signal mesuré est traité pour éliminer le bruit dû aux effets de l'onde de choc sur la culasse et, par voie de conséquence, sur le capteur et il est alors possible d'introduire une avance à l'allumage très tôt avant le P.M.H. comme le montre le diagramme de la figure 3.

Ainsi, dans un système anti-cliquetis de l'art antérieur, l'avance introduite est matérialisée par le point A. Avec un dispositif de détection de cliquetis selon le schéma de la figure 2, l'avance introduite est matérialisée par le point B ; cette avance est matérialisée par le point C avec le dispositif selon le schéma de la figure 2, la zone hachurée correspondant à la zone de cliquetis située après le PMH.

## Revendications

1. Dispositif de détection et de mesure de cliquetis dans un moteur à explosion à allumage commandé caractérisé en ce qu'il comprend :

   - un capteur d'émission acoustique (24) qui est fixé sur la culasse du moteur et qui fournit un signal électrique,
   - un circuit d'amplification et de filtrage (26) du signal électrique fourni par le capteur d'émission acoustique (24), et
   - un circuit électronique de traitement (54, 38, 40) du signal amplifié et filtré qui fournit une valeur représentative du cliquetis.

2. Dispositif selon la revendication 1, caractérisé en ce que le circuit électronique de traitement (54) comprend :

   - un circuit électronique (28) réalisant une fenêtre temporelle du signal amplifié et filtré de manière à ne prendre en compte que le signal du capteur (24) précédant le Point Mort haut (P.M.H.),
   - un circuit de redressement (30) du signal électrique apparaissant dans la fenêtre temporelle, et
   - un circuit d'intégration (32) du signal redressé qui fournit un signal de cliquetis dont l'amplitude est représentative de la valeur du cliquetis.

3. Dispositif selon la revendication 1, caractérisé en ce que le circuit électronique de traitement comprend :

- un circuit d'échantillonnage et de codage (38) du signal amplifié et filtré qui fournit des valeurs numériques mesurées VNm, et
- un calculateur numérique (40) convenablement programmé pour calculer, d'une part à l'aide d'un modèle mathématique (42) incluant un modèle de cliquetis (50) et un modèle du système (52), des valeurs numériques estimées (VNe) et, d'autre part, les nouveaux paramètres du cliquetis dont son amplitude, à partir des valeurs numériques estimées (VNe) et des valeurs numériques mesurées (VNm).

4. Dispositif selon la revendication 3, caractérisé en ce que le modèle mathématique est défini par le produit de convolution :

$$- VNe(t) = k(t)*T(t)*c(t)$$

dans lequel :

$$- k(t) : f(p, t) = \sum_{i=1}^{N} a_i . \delta(t - \tau_i)$$

est le modèle mathématique du cliquetis,

$$- T(t) = g(\pi, t) = \sum_{j=1}^{M} \delta(t - \tau_j)$$

est le modèle mathématique du système,

- $c(t)$ est la réponse impulsionnelle du capteur d'émission acoustique,
- $p$ sont les paramètres d'amplitude $a_i$, de retard $\tau_i$ et de nombre d'impulsions N du cliquetis,
- $\pi$ sont les paramètres de retard $\tau_j$ et de nombre d'impulsions M du système.

5. Système anti-cliquetis comprenant un dispositif de détection et de mesure du cliquetis selon l'une quelconque des revendications précédentes 1 à 4.

6. Système de mise au point d'un moteur à allumage commandé comprenant un dispositif de détection et de mesure du cliquetis selon l'une quelconque des revendications 1 à 4.

7. Système de diagnostic pour moteur à allumage commandé comprenant un dispositif de détection et de mesure du cliquetis selon l'une quelconque des revendications 1 à 4.

20      22      18

10

24

12

8

14

16

## FIG.1

26

Signal Point Mort Haut (P.M.H)

54

Fenêtre
temporelle                28

Redressement             30

intégration               32

Valeur de cliquetis

anti-
cliquetis                 34

C   B   A  PMH          Zone de cliquetis

+

## FIG.3

16

**FIG.2**

**Office européen des brevets**

## RAPPORT DE RECHERCHE EUROPEENNE

Numéro de la demande

EP 98 40 1590

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 34 34 823 A (ROBERT BOSCH GMBH) 3 avril 1986 * le document en entier * | 1,2,5,6 | G01L23/22 |
| A | US 5 522 258 A (HAFNER) 4 juin 1996 * colonne 3, ligne 1 - ligne 34 * | 3,4 | |
| A | US 5 483 936 A (KERSTEIN ET AL.) 16 janvier 1996 * revendication 1 * | 3,4 | |

| DOMAINES TECHNIQUES RECHERCHES (Int.Cl.6) |
|---|
| G01L |

Le présent rapport a été établi pour toutes les revendications

| Lieu de la recherche | Date d'achèvement de la recherche | Examinateur |
|---|---|---|
| LA HAYE | 24 septembre 1998 | Mucs, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)